Europäisches Patentamt

European Patent Office

Office européen des brevets

(11) Veröffentlichungsnummer: **0 224 705 B1**

# EUROPÄISCHE PATENTSCHRIFT

(45) Veröffentlichungstag der Patentschrift: **03.06.92**

(51) Int. Cl.⁵: **H02M 3/335**

(21) Anmeldenummer: **86114630.6**

(22) Anmeldetag: **22.10.86**

(54) **Schaltungsanordnung für ein als Sperrwandler arbeitendes Schaltnetzteil.**

(30) Priorität: **22.11.85 DE 3541319**

(43) Veröffentlichungstag der Anmeldung:
**10.06.87 Patentblatt 87/24**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**DE-A- 3 121 638**
**US-A- 4 323 961**

**IBM TECHNICAL DISCLOSURE BULLETIN,
Band 15, Nr. 4, September 1972, Seiten
1359-1360, New York, US; W.C. SINGLETON:
"Wide range uniformly high-efficiency DC-
DC converter"**

**FUNKSCHAU, Nr. 1, Januar 1983, Seiten
67-71, München, DE; H.P. SIEBERT:
"Getaktete Regler"**

**ELECTRONICS, Band 48, Nr. 5, 6. März 1975,
Seiten 95-97, Ottawa, CA; D.H. TRELEAVEN:
"Monolithic IC simplifies DC to DC converter
design"**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Hartmann, Uwe
Tallardstrasse 15
W-7730 Villingen-Schwenningen(DE)**
Erfinder: **Ohnemus, Fritz
An der Hammerhalde 13
W-7730 Villingen-Schwenningen(DE)**

## Beschreibung

Die Erfindung geht aus von einer Schaltungsanordnung für ein als Sperrwandler arbeitendes Zeilensynchronisiertes Schaltnetzteil zur Speisung elektronischer Geräte mit einem Transformator, dessen Primärwicklung von einer Treiberstufe lastabhängig über einen durch in ihrer Breite modulierte Impulse gesteuerten elektronischen Schalters während einer Ladephase an eine ungeregelte Gleichspannung anschaltbar ist, wobei eine die Treiberstufe ansteuernde Regelschaltung vorgesehen ist, die in Abhängigkeit von der Belastung des Schaltnetzteils das Tastverhältnis der Impulse ändert und den elektronischen Schalter während der Entladephase sperrt.

Es ist eine Schutzschaltung bekannt, bei welcher in Verbindung mit einer Horizontalablenkschaltung mit einem Zeilentransformator in einem Fernsehempfangsgerät von einer Wicklung des Zeilentransformators eine Informationsspannung abgegriffen wird, die in einem Schwellwertschalter mit einer Referenzspannung verglichen wird, bei deren Überschreiten eine monostabile Kippstufe eingeschaltet wird. Die Kippstufe schaltet die Treiberstufe ab, die den den Ablenkstrom liefernden Endtransistor sperrt, so daß dieser vor zu großen Strom geschützt wird (DE-PS 27 50 213). Nach der durch die monostabile Kippstufe vorgegebenen Zeitkonstante tritt die Horizontalablenkschaltung wieder in Funktion und wird wieder abgeschaltet, wenn die Störinformation noch vorhanden ist. Dieser Vorgang wiederholt sich intermittierend, bis nach einer Anzahl von Abschaltungen das gesamte Fernsehempfangsgerät abgeschaltet wird.

Es ist auch bekannt, für die Stromversorgung von elektronischen Geräten, insbesondere für die Stromversorgung von Fernsehempfangsgeräten, Schaltnetzteile zu verwenden. Diese arbeiten als Sperrwandler, indem bei gesperrtem, zumeist mit zeilenfrequenten Impulsen angesteuertem, elektronischen Schalter, der in der im Oberbegriff des Patentanspruchs bezeichneten Art eingeschaltet ist, die Energie auf die Sekundärseite des Transformators übertragen wird. Auch derartig aufgebaute Schaltnetzteile sind mit einer Schutzschaltung versehen, die bei zu großem Strom im elektronischen Schalter in der zuvor beschriebenen Weise abgeschaltet werden.

Bei der Anwendung von Schaltnetzteilen in Fernsehempfangsgeräten sind die Anforderungen besonders hoch. Sie sollen zunächst einen möglichst hohen Regelbereich besitzen, d.h. sie sollen Netzspannungen von 90 V bis 264 V ausregeln. Die Regelung erfolgt durch Änderung des Tastverhältnisses der zeilenfrequenten Ansteuerimpulse. Derartige Schaltnetzteile sind großen Lastschwankungen ausgesetzt, die durch die großen Strahlstromschwankungen und in Abhängigkeit von der abgegebenen niederfrequenten Leistung hervorgerufen werden. Bei der zukünftigen Anwendung in Verbindung mit Kameras, Bildschirmtextdecodern und anderen Peripheriegeräten ergeben sich zusätzliche Belastungen des Schaltnetzteils. Bei einem Schaltnetzteil nach dem Sperrwandlerprinzip ist sowohl der Scheitelwert des Ladestromes, der durch den eingeschalteten elektronischen Schalter und durch die Primärwicklung des Transformators fließt, sowie die Entladezeit, während der die gespeicherte Energie an die Sekundärseite des Transformators abgegeben wird, proportional der entnommenen Leistung. Die Ladezeit dagegen ist abhängig von der angelegten ungeregelten Betriebsspannung und der entnommenen Leistung. Der Transformator soll dabei so dimensioniert sein, daß bei maximal abgenommener Leistung und minimaler Betriebsspannung die Entladezeit und die Ladezeit des Schaltnetzteils gleich groß sind, wobei eine höchstmögliche Aussteuerung dadurch erreicht wird, daß sich bei dieser Leistung die Entladephase und die Aufladephase zeitlich gerade nicht überschneiden. Bei minimaler entnommener Leistung und maximaler ungeregelter Betriebsspannung soll die kleinstmögliche Ladezeit keine größere Ladung als die Entladung zur Folge haben. Bei einem Fernsehgerät sind diese Forderungen sehr schwer zu erfüllen. Die Lastschwankungen können bei einem Fernsehempfänger durch die starken Strahlstromschwankungen sehr groß sein, zumal bei großformatigen Bildröhren der Kontrast sehr hoch eingestellt wird. Trotz Vorkehrungen gegen zu hohe Strahlströme mit Hilfe von Schaltungen zur Strahlstrombegrenzung kann der Strahlstrom für die kurze Dauer z.B. für die Dauer eines oder mehrerer Halbbilder um das Sechs- bis Siebenfache überschritten werden. Sowohl die Zeilenendstufe als auch das Netzteil müssen diese Überlast ohne Schaden zu erleiden verarbeiten können. Diese überlast ist umso größer, je kleiner der Innenwiderstand der Zeilenendstufe ist. die zusätzlich aufzubringende Leistung wirkt auf das Netzteil zurück und dieses müßte für die Absicherung gegen die kurzzeitigen überlastungen überdimensioniert werden.

In IBM "Technical Disclosure Bulletin", Vol. 15, No. 4, Sept. 1972 wird ein DC-DC-Converter beschrieben, der eine ungeregelte Gleichspannung in eine oder mehrere geregelte Gleichspannungen umformt. Hierbei wird in Abhängigkeit von der Höhe der erzeugten sekundärseitigen Gleichspannung über einen Fehlerverstärker die Impulsbreite der den Schalttransistor ansteuernden Impulse verändert. Wenn also die Sekundärspannung absinkt, z.B. infolge einer überlast, wird automatisch die Impulsbreite zur Ansteuerung des Schalttransistors erhöht. Auch ist dort vorgesehen, in Abhängigkeit von der ungeregelten Primärspannung die Impulsbreite zu regeln. Eine Begrenzung einer durch die Regelung geforderten Impulsbreite findet aber nicht statt, so daß es vorkommen kann, daß der Schalttransistor zerstört wird, wenn die Regelung eine derart große Impulsbreite verlangt, die der Schalttransistor nicht mehr verträgt.

Der Erfindung liegt die Aufgabe zugrunde, den Regelbereich im wesentlichen auf die Laständerungen zu beschränken und die Höhe der Netzspannung mittels eines Steuersignals auf die Impulsbreitenmodulation einwirken zu lassen, daß im gesamten Neztspannungsbereich die maximal entnehmbare Leistung etwa konstant ist, so daß Laständerungen wie auch größere Netzspannungsschwankungen ausgeregelt werden, mit dem Ziel, den als Schalter dienenden Leistungstransistor vor überlastung zu schützen. Diese Aufgabe wird durch die im Patentanspruch angegebene Erfindung gelöst.

Nachstehend wird die Erfindung mit Hilfe der Zeichnung beschrieben.

Figur 1      zeigt ein Blockschaltbild der Erfindung;

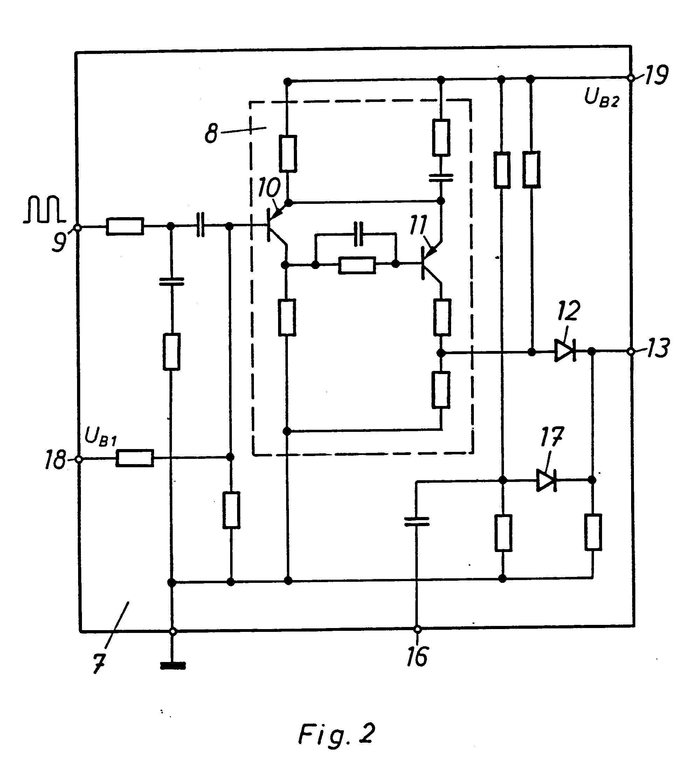

Figur 2      zeigt detailliert den wesentlichen Teil des Blockschaltbildes;

Figur 3      zeigt Diagramme zur Erläuterung der Wirkungsweise der Schaltungsanordnung.

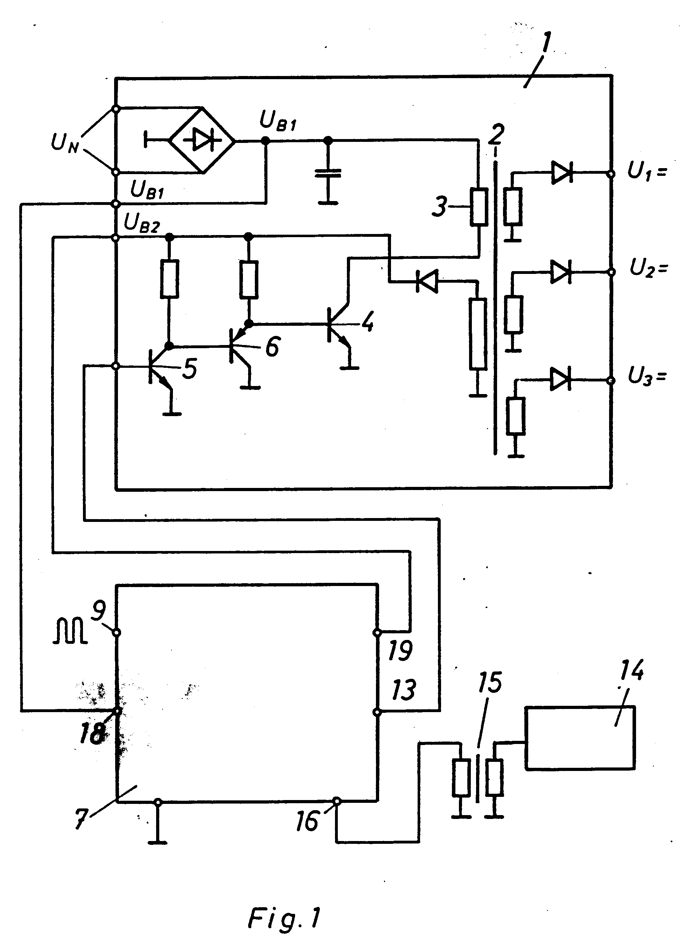

Wie in Figur 1 dargestellt, handelt es sich bei dem mit 1 bezeichneten Schaltungsblock um ein Schaltnetzteil, das nach dem Sperrwandlerprinzip arbeitet und z.B. in der DE-P 35 18 1958 beschrieben ist. In den Block 1 sind die wesentlichen Teile des Schaltnetzteils nur so weit eingezeichnet, wie sie für das Verständnis der nachfolgenden Beschreibung der Erfindung ausreichend sind. Es handelt sich dabei um den Schaltnetzteiltransformator 2, dessen Primärwicklung 3 einerseits an der ungeregelten gleichgerichteten Betriebsspannung $U_{B1}$ liegt und andererseits über den elektronischen Schalter 4 auf Bezugspotential schaltbar ist. Der elektronische Schalter 4 wird über Treiberstufen 5 und 6 mit Hilfe einer Rechteckspannung veränderbaren Tastverhältnisses angesteuert. Das Tastverhältnis richtet sich nach Belastung sowie primär- und sekundärseitigen Spannungsschwankungen. Die Sekundärspannungen $U_1$ bis $U_3$ sind besonders stabil, ebenso die Betriebsspannung $U_{B2}$. Die Schaltung arbeitet derart, daß immer dann, wenn die Treiberstufe 5 durchgeschaltet ist, der elektronische Schalter 4 gesperrt ist. Das ist immer dann der Fall, wenn die in der Primärwicklung 3 gespeicherte Energie auf die Sekundärseite des Transformators 2 übertragen wird. Beim Einschalten des Schaltnetzteils wird der elektronische Schalter 4 von der Steuerschaltung 7 kontinuierlich leitend gesteuert, d.h. mit ansteigender Impulsbreite, bis der geregelte Zustand eingetreten ist. Diese Impulsbreite ändert sich z.B. von 0 -30 $\mu$sec.. Bei netzseitigen Überspannungen kann diese maximale Impulsbreite dazu führen, daß die Primärwicklung zu lange magnetisch aufgeladen wird, so daß der Transformer 2 in die Sättigung gerät und infolge der dadurch bedingten Induktivitätsverkleinerung der Strom durch den Schalter 4 stark ansteigt und diesen zerstört.

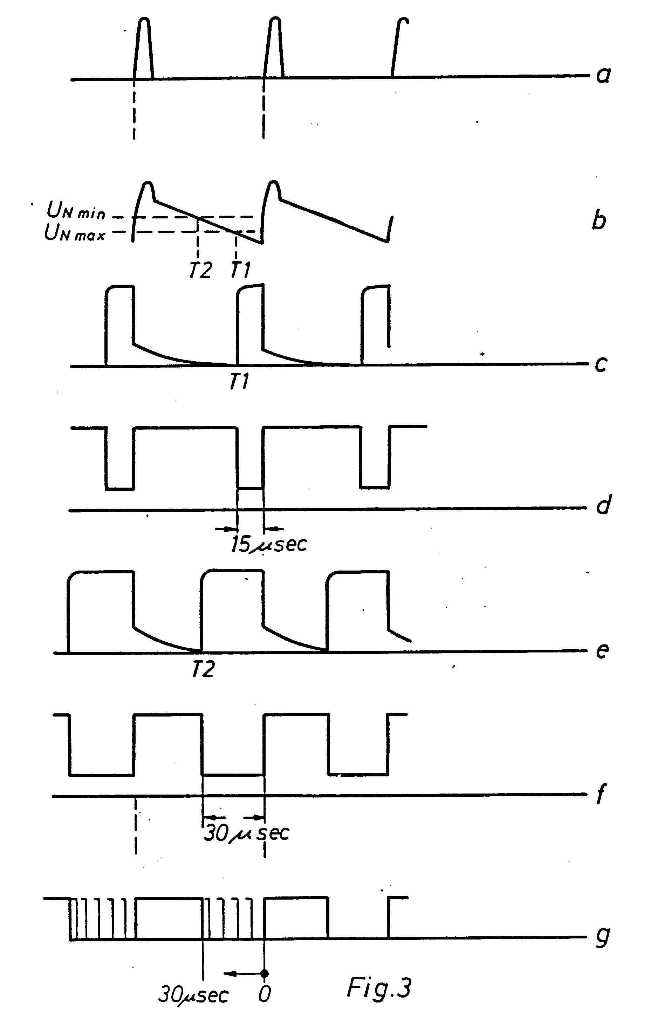

Deshalb ist vorgesehen, die maximale Impulsbreite bei Auftreten von Überspannungen aus dem Netz zu begrenzen. Die maximale Impulsbreite entsteht nur bei Netzunterspannung. Dies wird durch die nachfolgend beschriebene Schaltungsanordnung erreicht, die zu einem zeilensynchronisierten Schaltnetzteil hinzugefügt werden kann. Die Schaltung 7 besitzt einen Schmitt-Trigger 8, an dessen Eingang 9 zeilenfrequente Impulse gelegt sind (Figur 3a). Am Steuereingang des Transistors 10 entsteht eine sägezahnförmige Spannung nach Figur 3b, an dessen Kollektor eine Impulsspannung nach Figur 3c, bzw. Figur 3e entsteht, die den Transistor 11 des Schmitt-Triggers 8 ansteuert, an dessen Kollektor eine Rechteckspannung nach Figur 3d, bzw. Figur 3f abnehmbar ist. Diese gelangt über die Diode 12 an den Ausgang 13. Die von der Steuerschaltung 14 über den Transformator 15 gelieferte last- und netzspannungsabhängige Rechteckspannung mit veränderlichem Tastverhältnis (Figur 3g) ist an den Eingang 16 gelegt. Diese Impulse gelangen über die Diode 17 an den Ausgang 13. Die Schaltung 7 wird von der stabilisierten Spannung $U_{B2}$ am Eingang 19 gespeist. In Abhängigkeit von der an den Eingang 18 gelegten unstabilisierten gleichgerichteten Netzspannung $U_{B1}$ wird der Umschaltzeitpunkt T des Schmitt-Triggers 8 derart verschoben, daß bei maximaler Netzspannung die Impulse am Ausgang 13 auf z.B. maximal 15 $\mu$sec. Dauer begrenzt werden, indem durch die Impulse nach Figur 3d der Ausgang 13 zwangsweise auf hohem Potential gehalten wird, auch wenn die Steuerschaltung 14 auf niedriges Potential geht und die Treiberstufe 5 sperren möchte. Dadurch wird der elektronische Schalter 4 zwangsweise unter Umgehung der Steuerspannung aus der Steuerschaltung 14 gesperrt.

## Patentansprüche

1.    Schaltungsanordnung für ein als Sperrwandler arbeitendes zeilensynchronisiertes Schaltnetzteil zur Speisung elektronischer Geräte mit einem Transformator (2), dessen Primärwicklung (3) von einer Treiberstufe lastabhängig über einen durch in ihrer Breite modulierte Impulse gesteuerten elektronischen Schalter während einer Ladephase an eine ungeregelte gleichgerichtete Netzwechselspannung anschaltbar ist, wobei eine die Treiberstufe ansteuernde Regelschaltung vorgesehen ist, die in Abhängigkeit von der Belastung des Schaltnetzteils das Tastverhältnis der Impulse ändert und den elektronischen Schalter während einer Entladephase sperrt, **dadurch gekennzeichnet,** daß ein Steuerkreis (7) vorgesehen ist, der die maximale Impulsbreite der sekundärseitigen Regelung in Abhängigkeit von der primärseitigen ungeregelten Netzspannung derart begrenzt, daß bei niedriger Netzwechselspannung eine große maximale Impulsbreite und bei hoher Netzwechselspannung eine kleine maximale Impulsbreite erzeugt wird, so daß der maximal zulässige Soitzenwert des Magnetisierungsstroms durch den Transformator nicht überschritten wird.

2. Schaltungsanordnung nach Anspruch 1, **dadurch gekennzeichnet,** daß eine Schmitt-Trigger-Schaltung (8) vorgesehen ist, welche synchron mit dem Steuergenerator des elektronischen Schalters (4) arbeitet und Schaltimpulse liefert, deren Breite von der Netzspannung abhängt und für die maximale Breite der dan elektronischen Schalter ansteuernden Impulse bestimmend ist, indem ein Teil der Ansteuerimpulse unterdrückbar ist.

## Claims

1. A circuit arrangement for a switched-mode power supply which is line synchronised and operates as a switching regulator, for feeding electronic devices having a transformer (2), the primary winding (3) of which may be connected to an unregulated rectified mains a.c. voltage during a loading phase by a driver stage in load-dependent manner via an electronic switch controlled by amplitude-modulated pulses, in which a regulating circuit controlling the driver stage is provided which changes the mark/space ratio of the pulses according to the loading of the switched-mode power supply and which blocks the electronic switch during a discharge phase **characterised in that** a control circuit (7) is provided which limits the maximum pulse width of the secondary side control in dependence on the primary side uncontrolled mains voltage such that with a low mains a.c. voltage a large maximum pulse width is produced and with a high mains a.c. voltage a small maximum pulse width is produced, so that the maximum permitted peak value of the magnetising current is not exceeded by the transformer.

2. A circuit arrangement according to claim 1, **characterised in that** a Schmitt Trigger circuit (8) is provided which operates synchronously with the control generator of the electronic switch (4) and supplies switching pulses, the width of which depends on the mains voltage and is decisive for the maximum width of the pulses controlling the electronic switch, while a part of the control pulses can be suppressed.

## Revendications

1. Dispositif de circuit pour un bloc d'alimentation et de commutation à synchronisation de ligne qui fonctionne comme un convertisseur à oscillateur bloqué pour l'alimentation d'appareils électroniques avec un transformateur (2) dont l'enroulement primaire (3) peut être branché par un étage d'attaque, en fonction de la charge, par un commutateur électronique commandé par des impulsions modulées en durée, à une tension alternative de secteur redressée non réglée, un circuit de réglage qui excite l'étage d'attaque étant prévu, circuit qui, en fonction de la charge du bloc d'alimentation et de commutation, modifie le taux d'impulsions des impulsions et qui bloque le commutateur électronique pendant une phase de décharge, **caractérisé en ce** qu'un circuit de commande (7) est prévu qui limite la durée d'impulsions maximale du réglage secondaire en fonction de la tension de secteur non réglée primaire de telle manière qu'en cas de basse tension alternative de secteur une grande durée d'impulsions maximale est produite et, en cas de tension alternative de secteur élevée, une petite durée d'impulsions maximale est produite si bien que la valeur de crête maximale admissible du courant de magnétisation n'est pas dépassée par le transformateur.

2. Dispositif de circuit selon la revendication 1, **caractérisé en ce** qu'il est prévu un circuit à trigger de Schmitt (8) qui fonctionne de manière synchrone avec la génératrice pilote du commutateur électronique (4) et qui livre des impulsions de commutation dont la durée dépend de la tension du secteur et est déterminante pour la largeur maximale des impulsions qui excitent le commutateur électronique, une partie des impulsions d'excitation pouvant être supprimée.

Fig.1

Fig. 2

EP 0 224 705 B1

Fig.3